# EUROPÄISCHE PATENTANMELDUNG

(11) **EP 1 884 497 A2**
(43) Veröffentlichungstag der Anmeldung: **06.02.2008**
(21) Anmeldenummer: 07111749.3
(22) Anmeldetag: 04.07.2007
(51) Int. Cl.: C02F 9/00

(54) **Abwasserreinigungseinrichtung**

(30) Priorität: 24.07.2006 DE 102006034157
(71) Anmelder: SIEMENS AKTIENGESELLSCHAFT, 80333 München (DE)
(72) Erfinder: Müller, Bernd, 85368, Moosburg (DE); Strätz, Klaus, 96191, Viereth-Trunstadt (DE)

(57) **Zusammenfassung**

Abwasserreinigungseinrichtung umfassend wenigstens ein Belebungsbecken, in dem das zu behandelnde Wasser-Schlamm-Gemisch mit Sauerstoff versetzt wird, sowie wenigstens ein dem Belebungsbecken nachgeschaltetes Nachklärbecken, dem aus dem Belebungsbecken das Schlamm-Wasser-Gemisch zugeführt wird, das in geklärtes Wasser und einen dem Belebungsbecken rückzuführenden wasserhaltigen Rückschlamm getrennt wird, wobei dem Belebungsbecken (2) und/oder dem Nachklärbecken (6) wenigstens eine Trenneinrichtung (20) nachgeschaltet ist, der aus dem Belebungsbecken (2) ein Teil des Schlamm-Wasser-Gemischs (3) und/oder aus dem Nachklärbecken (6) zumindest ein Teil des Rückschlamms (10) zugeführt wird, mittels der ein Abfallschlamm (23) enthaltend wenigstens ein aus vormals im Wasser gelöst vorhandenen Reaktionspartnern gebildetes Reaktionsprodukt, insbesondere CaCO₃, abtrennbar ist, und von der zurückbleibendes Schlamm-Wasser-Gemisch oder Rückschlamm dem Belebungsbecken (2) zuführbar ist.

## Beschreibung

Die Erfindung betrifft eine Abwasserreinigungseinrichtung umfassend wenigstens ein Belebungsbecken, in dem das zu behandelnde Wasser-Schlamm-Gemisch mit Sauerstoff versetzt wird, sowie wenigstens ein dem Belebungsbecken nachgeschaltetes Nachklärbecken, dem aus dem Belebungsbecken das Schlamm-Wasser-Gemisch zugeführt wird, das in geklärtes Wasser und einen dem Belebungsbecken rückzuführenden wasserhaltigen Rückschlamm getrennt wird.

In Abwasserreinigungseinrichtungen der beschriebenen Art wird zur Abwasserreinigung ein so genanntes Belebungsverfahren angewendet, worunter man die biologische Abwasserreinigung mit Hilfe von suspendierten Mikroorganismen (belebter Schlamm), die in der Lage sind Flocken zu bilden und dadurch im System angereichert werden können, versteht. Dies findet prinzipiell im Belebungsbecken statt. Oft ist dem Belebungsbecken eine anaerobe Wasserbehandlung vorgeschaltet, wo das zu behandelnde Abwasser, beispielsweise Abwasser aus einer Papierherstellanlage, zunächst aktiv vorgesäuert wird. Aus der Versäuerung gelangt das Abwasser in den Anaerobreaktor, wo die mitgeführten organischen Säuren durch anaerobe Mikroorganismen abgebaut und in Biogas umgesetzt werden. Durch den Abbau der Säuren steigt der pH-Wert an. Das so vorbehandelte Abwasser wird dem, dem Anaerobreaktor nachgeschalteten Belebungsbecken zugeführt, von unter Zugabe von Luft bnzw. Sauerstoff, mithin also eine künstliche Belüftung zur Versorgung der dort vorhandenen aeroben Mikroorganismen, eine Erhöhung der Mikroorganismendichte und gleichzeitig eine Umwälzung erfolgt. Das vorgesäuerte Wasser-Schlamm-Gemisch wird von dort dem Belebungsbecken zugeführt, wo Sauerstoff zugegeben wird, mithin also eine künstliche Belüftung zur Versorgung der Mikroorganismen und zur Erhöhung der Mikroorganismendichte und gleichzeitig zur Umwälzung erfolgt. Dies geschieht, indem Luft bodennah eingeblasen wird. Infolge der Umwälzung werden auch Ablagerungen vermieden und ein guter Kontakt zwischen dem belebten Schlamm, den Schmutzstoffen und dem Sauerstoff gewährleistet. Von dem Belebungsbecken strömt das Wasser-Schlamm-Gemisch in ein Nachklärbecken. Dort erfolgt die Sammlung und Eindickung des Schlamms zur Rückführung in das Belebungsbecken. Das heißt, dort erfolgt eine Sedimentation des Schlamms, gereinigtes Wasser wird abgetrennt und der Wiederverwendung zugeführt. Der sedimentierte Schlamm, üblicherweise Rückschlamm genannt, wird im Nachklärbecken zwischengespeichert und dem Bewegungsbecken zugeführt, wozu eine Rückschlammleitung mit einer Pumpe vorgesehen ist. Dies ist notwendig, um eine ausreichende Mikroorganismendichte im Belebungsbecken und dadurch eine ausreichende Abbauleistung zu gewährleisten.

Wie bereits beschrieben ist üblicherweise das der Anaerobstufe zugeführte Wasser vorversäuert, es bildet sich dort vor allem Essigsäure. Diese Versäuerung führt dazu, dass beispielsweise Calcium, das häufig bereits von Haus aus im zu behandelnden Wasser gelöst vorliegt, noch stärker in Lösung geht, mithin also der gelöste Calciumanteil im im Anaerobreaktor zu behandelnden Abwasser relativ hoch ist. Im Abwasser ist gleichermaßen Kohlendioxid gelöst, so dass sich letztlich ein Kalk-Kohlensäure-Gleichgewicht einstellt, das in der geschlossenen Anaerobstufe dazu führt, dass diese Reaktionspartner auch bei hoher Konzentration gelöst bleiben und nicht miteinander unter Ausfällung von CaCO₃ reagieren.

Im Belebungsbecken nun wird wie beschrieben Luft eingeblasen, was dazu führt, dass Kohlendioxid ausgetragen wird und sich infolge dessen das Kalk-Kohlensäure-Gleichgewicht verschiebt. Es kommt zum Ausfällen von CaCO₃ (Kalk) als Reaktionsprodukt. Bei relativ hoher Kalkbildungsrate wird hierdurch Biomasse, also Schlamm nebst Mikroorganismen (Belebtschlamm) verdrängt, was zu Fehlinterpretationen bezüglich der Anlagenbelastung wie Beispielsweise dem Parameter "Schlammbelastung" führen kann. Auch reicht die mit der eingebrachten Belebungsluft vorhandene Turbulenz mitunter nicht mehr aus, den schweren kalkhaltigen Schlamm aus dem Becken auszutragen. Die Abbauleistung der Anlage sinkt.

Der Erfindung liegt damit das Problem zugrunde, eine Abwasserreinigungseinrichtung anzugeben, die demgegenüber verbessert ist und auf längere Zeit mit gleich bleibend hoher Abbauleistung arbeiten kann.

Zur Lösung dieses Problems ist bei einer Abwasserreinigungseinrichtung der eingangs genannten Art erfindungsgemäß vorgesehen, dass dem Belebungsbecken und/oder dem Nachklärbecken wenigstens eine Trenneinrichtung nachgeschaltet ist, der aus dem Belebungsbecken ein Teil des Schlamm-Wasser-Gemischs und/oder aus dem Nachklärbecken zumindest ein Teil des Rückschlamms zugeführt wird, mittels der ein Abfallschlamm enthaltend wenigstens ein aus vormals im Wasser gelöst vorhandenen Reaktionspartnern gebildetes Reaktionsprodukt, insbesondere CaCO₃, abtrennbar ist, und von der zurückbleibendes Schlamm-Wasser-Gemisch oder Rückschlamm dem Belebungsbecken zuführbar ist.

Die erfindungsgemäße Trenneinrichtung ermöglicht es, zumindest einen beachtlichen Teil, bevorzugt annähernd das gesamte Reaktionsprodukt aus dem ihm zugeführten Schlamm-Wasser-Gemisch beziehungsweise dem Rückschlamm abzutrennen. Das heißt, es erfolgt quasi kontinuierlich ein Entzug des störenden, die Reinigungsleistung beeinträchtigenden Kalks. Das von einer Trenneinrichtung, die beispielsweise dem Belebungsbecken nachgeschaltet ist, abgezogene, vom Reaktionsprodukt, also dem Kalk "gereinigte" Wasser-Schlamm-Gemisch kann somit unmittelbar und ohne der Gefahr einer Erhöhung des Kalkanteils im Schlamm-Wasser-Gemisch im Belebungsbecken zurückgeführt werden. Entsprechendes gilt für die Abtrennung des Kalks aus dem wasserhaltigen Rückschlamm. Auch dieser kann, weil nicht mehr mit Kalk belastet, ohne Beeinträchtigung der Abbauleistung im Bewegungsbecken zurückgeführt werden. Dabei ist die Reinigungsleistung bezogen auf einen Liter Wasser-Schlamm-Gemisch beziehungsweise Rückschlamm bei der Behandlung des Rückschlamms größer, da der Rückschlamm mit bis zu 5 - 6 g Kalk pro Liter stärker kalkbelastet ist, als das Wasser-Schlamm-Gemisch mit durchschnittlich 2 - 3 g pro Liter.

Die Trenneinrichtung selbst ist bevorzugt eine Zentrifugaltrenneinrichtung, der das Wasser-Schlamm-Gemisch oder der flüssige Rückschlamm zugeführt wird. Dort wird das Gemisch oder der Rückschlamm tangential im oberen Bereich zugeführt. Es ergibt sich ein Wirbel, schwere Anteile, eben insbesondere Kalk, wandern in der wirbelnden Säule nach unten und können dort zusammen mit Schlammanteilen als Abfallschlamm abgezogen werden. Im oberen Einrichtungsbereich wird das vom Kalk befreite Schlamm-Wasser-Gemisch oder der Rückschlamm abgezogen und zum Belebungsbecken zurückgeführt.

Vom Belebungsbecken aus ist es möglich, das Wasser-Schlamm-Gemisch unmittelbar der Trenneinrichtung zuzuführen. Selbstverständlich besteht jedoch die Möglichkeit, ein Sammelbecken für das Wasser-Schlamm-Gemisch zwischenzuschalten, wobei hier jedoch vermieden werden sollte, dass der Schlamm sedimentiert. Zwischen dem Nachklärbecken und der Trenneinrichtung kann ebenfalls wenigstens ein Rückschlammsammelbecken vorgesehen sein, dem von dem Nachklärbecken kommend Rückschlamm zuführbar und von dem Rückschlamm zur Trenneinrichtung abführbar ist.

Grundsätzlich besteht die Möglichkeit, den gesamten vom Nachklärbecken oder von dem Rückschlammsammelbecken kommenden Rückschlamm in der Trenneinrichtung zu behandeln. Gleichwohl ist es denkbar, nur einen Teil des von der Trenneinrichtung oder dem Rückschlammsammelbecken kommenden Rückschlamm der Trenneinrichtung zuzuführen und den anderen Teil dem Belebungsbecken zuzuführen, insbesondere dann, wenn der Rückschlammanteil, der von der Trenneinrichtung zum Belebungsbecken zugeführt wird, bei einer vollständigen Rückschlammbehandlung nicht ausreichend wäre, die Mikroorganismendichte im Belebungsbecken und dadurch die ausreichende Abbauleistung konstant zu halten, wenn also infolge der Abtrennung zu wenig Rückschlamm zurückgeführt werden könnte.

Schließlich kann der an der Trenneinrichtung anfallende Abfallschlamm bevorzugt zusammen mit dem aus dem Nachklärbecken oder dem Rückschlammsammelbecken stammenden Überschussschlamm über eine gemeinsame Leitung gezogen werden. Durch den Abbau von Verschmutzungen gewinnen die Mikroorganismen Energie und vermehren sich. Um einen konstanten Gehalt an Mikroorganismen im System zu erhalten, ist der gewachsene (überschüssige) Teil des Rückschlamms, der als Überschussschlamm bezeichnet wird, abzuziehen, er ist zu entsorgen. Nachdem auch der Abfallschlamm zu entsorgen ist, bietet es sich an, beide über eine gemeinsame Leitung der Entsorgung zuzuführen.

Weiter Vorteile, Merkmale und Einzelheiten der Erfindung ergeben sich aus den im Folgenden beschriebenen Ausführungsbeispielen sowie anhand der Zeichnungen. Dabei zeigen:
- FIG 1: eine Prinzipdarstellung einer erfindungsgemäßen Abwasserreinigungseinrichtung einer ersten Ausführungsform, und
- FIG 2: eine Prinzipdarstellung einer erfindungsgemäßen Abwasserreinigungseinrichtung einer zweiten Ausführungsform.

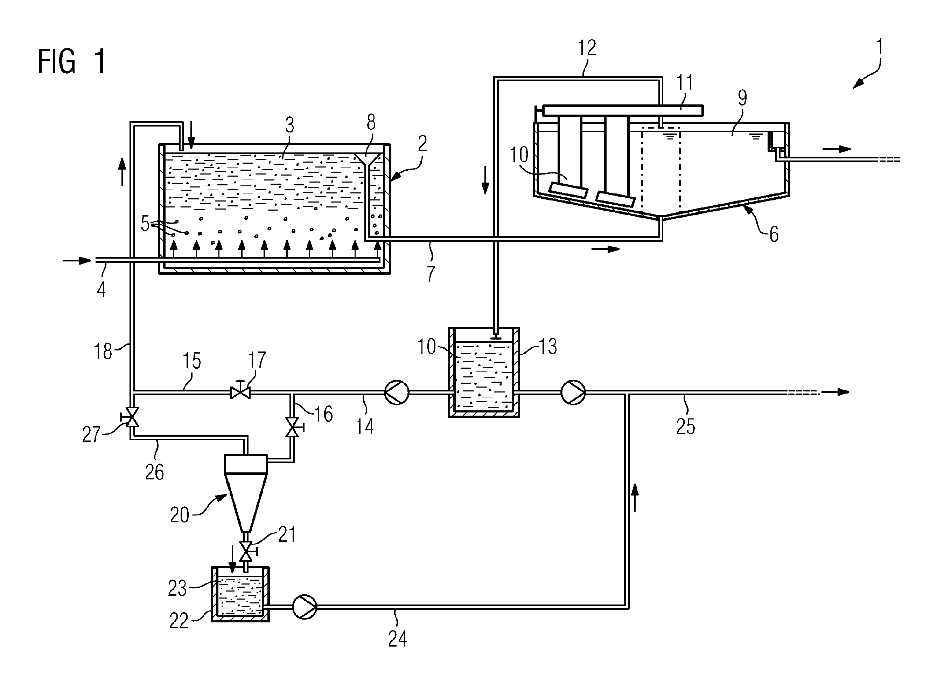

FIG 1 zeigt eine Prinzipdarstellung einer erfindungsgemäßen Abwasserreinigungseinrichtung 1, umfassend ein Belebungsbecken 2, dem über eine nicht näher gezeigte Zufuhreinrichtung beispielsweise von einer vorgeschalteten Anaerobieeinrichtung, wo das zu behandelnde Abwasser vorbehandelt, üblicherweise vorgesäuert wird, Wasser zugeführt wird. Im Belebungsbecken ist ein Wasser-Schlamm-Gemisch 3 vorhanden. Dort erfolgt der biologische Abbau und Umbau der organischen und anorganischen Schmutzstoffe, die im zu reinigenden Wasser enthalten sind. Nachdem es sich bei dem dort angewendeten Belebungsverfahren um ein biologisches Abwasserreinigungsverfahren mit Hilfe suspendierter Mikroorganismen (belebter Schlamm) handelt, die in der Lage sind, Flocken zu bilden und dadurch im System angereichert werden können, ist im Wasser-Schlamm-Gemisch 3 zwangsläufig eine relativ hohe Mikroorganismendichte vorhanden. Um diese auch für eine hinreichend hohe Abbaurate aufrechterhalten zu können, ist eine ausreichende Sauerstoffversorgung der Mikroorganismen erforderlich, wozu über eine Luftleitung 4 im gezeigten Beispiel Sauerstoff 5, am einfachsten Luft, bodennah in das Wasser-Schlamm-Gemisch 3 eingedüst wird. Hierdurch wird ein ausreichender, guter Kontakt zwischen dem belebten Schlamm, also dem Wasser-Schlamm-Gemisch, den Schmutzstoffen und dem Sauerstoff gewährleistet. Ferner kommt es zu einer kontinuierlichen Umwälzung des Gemisches.

Dem Belebungsbecken 2 ist ein Nachklärbecken 6 nachgeschaltet, in das über eine Zufuhrleitung 7 Wasser-Schlamm-Gemisch 3 aus dem Belebungsbecken 2, dort über einen Trichterablauf 8 im Bereich der Gemischoberfläche, zugeführt wird. Im Nachklärbecken wird das geklärte Wasser 9 vom zurückbleibenden Schlamm 10, der an einer entsprechenden Beckenstelle gesammelt wird, getrennt. Der abgesetzte Schlamm 10 wird, nachdem ihm letztlich ein gewisser Wasseranteil entzogen wird, eingedickt. Bei diesem Schlamm 10, der üblicherweise auch als Rückschlamm bezeichnet wird, handelt es sich, nachdem er mit dem Gemisch aus dem Belebungsbecken ausgeschwemmt wurde, um belebten Schlamm, der im Nachklärbecken 6 gespeichert werden muss und wieder dem Belebungsbecken 2 zugeführt werden muss, da dort ansonsten ein Unterschuss gegeben wäre, mithin also die Mikroorganismendichte nicht mehr aufrechterhalten werden könnte. Vom Nachklärbecken 6 wird der Rückschlamm über eine geeignete Abzugseinrichtung 11 über eine Leitung 12 im gezeigten Beispiel in ein Rückschlammsammelbecken 13 gegeben. Von dort wird der Rückschlamm über eine Abzugsleitung 14 abgezogen. Die Abzugsleitung 14 teilt sich im gezeigten Ausführungsbeispiel in zwei Leitungsabschnitte 15 und 16 auf. Der Leitungsabschnitt 15, der über ein Ventil 17 geöffnet und geschlossen werden kann, führt in eine Rückführleitung 18, über die darin geförderter Rückschlamm dem Belebungsbecken 2 zurückgeführt werden kann. Der Leitungsabschnitt 16, der ebenfalls über ein Ventil 19 geöffnet und geschlossen werden kann, führt zu einer Trenneinrichtung 20, bei der es sich bevorzugt um eine Zentrifugaltrenneinrichtung, also um einen Zentrifugalbeschleuniger oder Hydrozyklon handelt. Diese Trenneinrichtung 20 dient dazu, ein im Wasser des Rückschlamms, also in dem Wasser-Rückschlamm-Gemisch vorhandenes Reaktionsprodukt, das aus vormals im aus der Anaerobieeinrichtung zugeführten Wasser gelöst vorliegenden Reaktionsprodukten gebildet wurde, abzutrennen. Hierbei handelt es sich im Wesentlichen um Kalk (CaCO₃), der sich aus gelöstem Kalzium und gelöstem Kohlendioxid bildet. Im Wasser liegt, bevor es dem Belebungsbecken zugeführt wird, ein Kalk-Kohlensäure-Gleichgewicht vor, also ein Gleichgewicht an gelöstem Kalzium und gelöstem Kohlendioxid in Form von Kohlensäure. Durch die Luftzufuhr im Belebungsbecken wird Kohlendioxid ausgetragen, es kommt zu einer Ausfällreaktion des CaCO₃. Dieses ist störend, es stellt sich mitunter eine beachtlich hohe Kalkbildungsrate ein, die Biomasse, also Belebtschlamm, aufgrund ihrer Masse verdrängt und aus dem Belebungsbecken 2 aus schwemmt. Der Kalk lagert sich schwerpunktmäßig im unteren Beckenbereich an, er ist schwer, die Umwälzung verschlechtert sich, mithin also die Versorgung der Mikroorganismen mit Sauerstoff. Die Reinigungs- und Abbaurate verschlechtert sich. Dieser Kalk wird zum Teil auch in das Nachklärbecken mit ausgeschwemmt und reichert sich dort im Rückschlamm 10 an, beziehungsweise kommt es dort zu möglichen weiteren Ausfällreaktionen.

Dieser nun mit dem Reaktionsprodukt, vornehmlich eben Kalk angereicherter Rückschlamm wird in die Trenneinrichtung 20 gegeben, wo er im oberen Bereich tangential eingeführt wird. Es bildet sich im Inneren der kegelförmigen Trenneinrichtung ein Wirbel aus. Schwerere Gemischanteile, hier eben insbesondere der Kalk, wandern nach unten und werden über den unteren Abzug 21 in ein Abfallschlammsammelbecken 22 als Abfallschlamm 23 abgezogen. Dieser Abfallschlamm 23 beinhaltet natürlich einen gewissen Anteil an Belebtschlamm, aber eben auch den abzuziehenden Kalk. Der Abfallschlamm 23 wird über eine Leitung 24 abgezogen. Die Leitung 24 mündet in eine Leitung 25, über die Überschussschlamm aus dem Rückschlammsammelbecken 13 abgezogen und entsorgt wird. Bei diesem Überschussschlamm handelt es sich um einen überschüssigen Schlammanteil, der nicht mehr in das Belebungsbecken 2 zurückzuführen ist. Durch den Abbau von Verschmutzungen gewinnen die Mikroorganismen im Belebtschlamm an Energie und vermehren sich. Um einen konstanten Gehalt an Mikroorganismen im System zu halten, ist nicht der gesamte abgezogene Rückschlamm zurückzuführen, sondern eben nur ein Anteil. Der überschüssige Schlammanteil wird als Überschussschlamm bezeichnet und entsorgt.

In der Trenneinrichtung 20 fällt neben dem Abfallschlamm 23 natürlich auch ein vom Kalk befreites Wasser-Schlamm-Gemisch an, das über die Abzugsleitung 26, der ebenfalls ein Ventil 27 nachgeschaltet ist, abgezogen und über die Rückführleitung 18 dem Belebungsbecken 2 zugeführt wird. Der Rückschlamm wird je nach Bedarf entweder über die Leitung 15 direkt zurückgeführt oder über den Leitungsabschnitt 16 der Trenneinrichtung 20 zugeführt. Auch ist es denkbar, beide Leitungen geöffnet zu halten, so dass kontinuierlich ein gewisser Anteil an ungereinigtem Rückschlamm zurückgeführt wird, während der andere Teil des Rückschlamms der Trenneinrichtung 20 zugeführt wird. Für eine hohe Aufkonzentrierung des Kalkschlammes lässt sich die Trenneinrichtung 20 mit mehreren Aggregaten auch mehrstufig in Serie betreiben. Hierzu ist der untere Abzug 21 des ersten Aggregats auf den Zulauf des zweiten Aggregats zu schalten. Sollte die Trenneinrichtung aus mehr als zwei Einzelaggregaten bestehen, wird entsprechend weiter verfahren.

In jedem Fall besteht so die Möglichkeit, den sich im Rückschlamm befindlichen Kalkanteil weitgehend oder vollständig abzutrennen, so dass grundsätzlich der Kalkanteil im Belebungsbecken 2 aufgrund der Trennung reduziert werden kann.

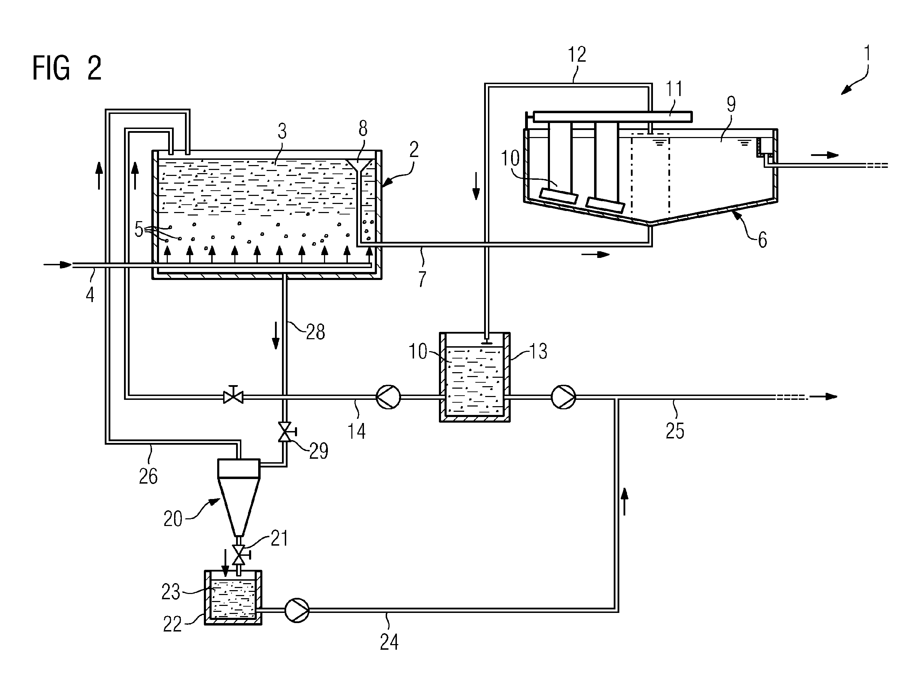

FIG 2 zeigt eine weitere erfindungsgemäße Ausführung einer Abwasserreinigungseinrichtung 1. Auch diese umfasst ein Belebungsbecken 2 sowie ein Nachklärbecken 6 und eine Trenneinrichtung 20. Der grundsätzliche Aufbau ist der gleiche wie bezüglich der FIG 1 beschrieben.

Anders als in FIG 1 wird dort jedoch über eine Leitung 28 direkt aus dem Belebungsbecken 2 Wasser-Schlamm-Gemisch zur Trenneinrichtung 20 geführt. Die Leitung 28 zieht das Wasser-Schlamm-Gemisch im Bereich des Beckenbodens aus dem Belebungsbecken 2 ab, wo die Kalkdichte am größten ist. Über ein Ventil 29 kann die Leitung 28 geöffnet und geschlossen werden. Auch hier wird das Wasser-Schlamm-Gemisch im oberen Bereich der Trenneinrichtung 20 tangential eingedüst, es bildet sich auch hier wiederum ein Hydrozyklon aus, über die Abzugseinrichtung 21 wird der Abfallschlamm 23 im Abfallschlammsammelbecken 22 aufgefangen. Dieser mit Kalk beladene Abfallschlamm 23 wird auch hier in entsprechender Weise gemeinsam mit dem aus dem Rückschlammsammelbecken 13 kommenden Überschussschlamm entsorgt. Von der Trenneinrichtung 20 wird auch hier das "gereinigte" Wasser-Schlamm-Gemisch über eine Leitung 26 abgezogen und dem Belebungsbecken 2 zugeführt.

Der Rückschlamm 10 aus dem Rückschlammsammelbecken 13 wird hier über die Rückschlammleitung 14 direkt dem Belebungsbecken 2 zugeführt.

Denkbar wäre es hier natürlich, auch den Rückschlamm 10 aus dem Rückschlammsammelbecken 13 der Trenneinrichtung 20 zuzuführen, so dass diese sowohl das Wasser-Schlamm-Gemisch aus dem Belebungsbecken 2 als auch dem Rückschlamm 10 zur Kalkabtrennung behandelt. Gleichermaßen wäre es natürlich denkbar, eine zweite Trenneinrichtung 20 vorzusehen, der über die Leitung 14 der Rückschlamm zugeführt wird. Diese Trenneinrichtung 20 würde dann nur zum Abtrennen des Kalks aus dem Rückschlamm 10 dienen, während die andere Trenneinrichtung 20 ausschließlich zum Abtrennen des Kalks aus dem Wasser-Schlamm-Gemisch aus dem Belebungsbecken 2 dienen würde.

## Patentansprüche

1. Abwasserreinigungseinrichtung (1) umfassend wenigstens ein Belebungsbecken, in dem das zu behandelnde Wasser-Schlamm-Gemisch mit Sauerstoff versetzt wird, sowie wenigstens ein dem Belebungsbecken nachgeschaltetes Nachklärbecken, dem aus dem Belebungsbecken das Schlamm-Wasser-Gemisch zugeführt wird, das in geklärtes Wasser und einen dem Belebungsbecken rückzuführenden wasserhaltigen Rückschlamm getrennt wird, **dadurch gekennzeichnet, dass** dem Belebungsbecken (2) und/oder dem Nachklärbecken (6) wenigstens eine Trenneinrichtung (20) nachgeschaltet ist, der aus dem Belebungsbecken (2) ein Teil des Schlamm-Wasser-Gemischs (3) und/oder aus dem Nachklärbecken (6) zumindest ein Teil des Rückschlamms (10) zuführbar ist, mittels der ein Abfallschlamm (23) enthaltend wenigstens ein aus vormals im Wasser gelöst vorhandenen Reaktionspartnern gebildetes Reaktionsprodukt, insbesondere CaCO₃, abtrennbar ist, und von der zurückbleibendes Schlamm-Wasser-Gemisch oder Rückschlamm dem Belebungsbecken (2) zuführbar ist.

2. Abwasserreinigungseinrichtung (1) nach Anspruch 1, **dadurch gekennzeichnet, dass** die Trenneinrichtung (20) eine Zentrifugaltrenneinrichtung ist.

3. Abwasserreinigungseinrichtung (1) nach Anspruch 1 oder 2, **dadurch gekennzeichnet, dass** zwischen dem Nachklärbecken (6) und der Trenneinrichtung (20) wenigstens ein Rückschlammsammelbecken (13) vorgesehen ist, dem von dem Nachklärbecken (6) kommend Rückschlamm (10) zuführbar und von dem Rückschlamm (10) zur Trenneinrichtung (20) abführbar ist.

4. Abwasserreinigungseinrichtung (1) nach Anspruch 3, **dadurch gekennzeichnet, dass** ein Teil des von der Trenneinrichtung (20) oder dem Rückschlammsammelbecken (13) kommenden Rückschlamms (10) unmittelbar dem Belebungsbecken (2) und der andere Teil der Trenneinrichtung (20) zuführbar ist.

5. Abwasserreinigungseinrichtung (1) nach einem der vorangehenden Ansprüche, **dadurch** gekennzeich-net, dass der an der Trenneinrichtung (20) anfallende Abfallschlamm (23) zusammen mit aus dem Nachklärbecken (6) oder dem Rückschlammsammelbecken (13) stammenden Überschussschlamm über eine gemeinsame Leitung (25) abziehbar sind.
